# EUROPÄISCHE PATENTSCHRIFT

(11) **EP 0 961 945 B1**
(45) Veröffentlichungstag und Bekanntmachung des Hinweises auf die Patenterteilung: **14.02.2007**
(21) Anmeldenummer: 97952882.5
(22) Anmeldetag: 04.12.1997
(51) Int. Cl.: G02B 21/00, G02B 26/10

(54) **LICHTABTASTVORRICHTUNG**
LIGHT SENSING DEVICE
DISPOSITIF DE BALAYAGE LUMINEUX

(30) Priorität: 24.02.1997 DE 19707227
(43) Veröffentlichungstag der Anmeldung: 08.12.1999
(73) Patentinhaber: BODENSEEWERK PERKIN-ELMER GMBH, 88662 Überlingen (DE)
(72) Erfinder: WULF, Jürgen, D-88662 Überlingen (DE)
(74) Vertreter: Grünecker, Kinkeldey, Stockmair & Schwanhäusser Anwaltssozietät
(86) Internationale Anmeldenummer: PCT/EP1997/006794
(87) Internationale Veröffentlichungsnummer: WO 1998/038542

(56) Entgegenhaltungen:
- EP-A- 0 586 110
- WO-A-92/01966
- WO-A-94/18592
- US-A- 4 268 110
- US-A- 5 239 178

## Beschreibung

Die vorliegende Erfindung betrifft eine Lichtabtastvorrichtung zur Anregung und Detektion einer Emission von Sekundärlicht, insbesondere von Fluoreszenzlicht, von einer Probe mit einer Lichterzeugungsvorrichtung zur Erzeugung von Abtastlicht in Form eines einzigen Lichtstrahlenbündels, einer Ablenkeinheit zur in wenigstens einer Richtung veränderbaren Ablenkung des Abtastlichts zur Abtastung wenigstens einer Teilflache der Probe, einer Abbildungseinheit zur Abbildung von von der Probe ausgehendem Sekundärlicht und einer Nachweiseinheit zur Detektion des Sekundärlichts.

Lichtabtastvorrichtungen der zuvor genannten Art werden beispielsweise zur ortsaufgelösten Fluoreszenzuntersuchung einer Probe verwendet. Dabei wird in der genannten Vorrichtung zur Erzeugung des Abtastlichts in Form eines einzigen Strahlenbündels, bei der es sich zumeist um einen Laser handelt, ein engbegrenztes und auf die Probe fokussiertes Strahlenbündel erzeugt, das mittels einer Ablenkvorrichtung, z.B. in Form von Kippspiegeln mit zwei zueinander senkrecht stehenden Kipp- bzw. Drehachsen im optischen Weg des Lichtstrahlenbündels, über die Probe gerastert wird. Das Abtastlicht regt auf der Oberfläche einer Probe die Erzeugung von Sekundärlicht an, z.B. in der Form von Fluoreszenzlicht. Dieses Sekundärlicht wird über eine Abbildungsoptik gesammelt und auf einer Nachweiseinheit detektiert. Da die Ablenkeinheit in Abhängigkeit von der Stellung der Kippspiegel zueinander und relativ zur Probe auf genau definierbare Weise jeweils einen bestimmten Fleck auf der Probe bestrahlt, kann mittels der Nachweiseinheit, die die Intensität des Sekundärlichts erfaßt, eine ortsabhängige Aussage über die entsprechende Eigenschaft der Probe getroffen werden.

Die Abtastzeit für die Vermessung der gesamten Probe hängt von verschiedenen Parametem ab, wie der Größe des Bildfeldes auf der Probe, des Abtastinkrements, der Fleckgröße des Abtaststrahls auf der Probe, der Integrationszeit der Nachweiseinheit, der Abtastgeschwindigkeit bzw. Spiegelgeschwindigkeit der Ablenkeinheit und dem gewünschten Signal-zu-Rauschverhältnis. Bei Proben mit Abmessungen im Zentimeterbereich und hoher Ortsauflösung mit einem auf wenige Mikrometer fokussierten Abtaststrahlenbündel ergeben sich Abtastzeiten im Minuten- bis Stundenbereich. Derart lange Abtastzeiten stellen jedoch ein großes Problem beim Betrieb solcher Lichtabtastvorrichtungen dar.

Aus der WO 9201966 A war bereits ein optisches Rastermikroskop bekannt, bei dem zwei verschiedene Lichtquellen vorgesehen sind, deren Strahlenbündel unter einem Winkel auf einen gemeinsamen Strahlteiler auftreffen, über den die beiden Strahlbündel eine zu untersuchende Probe an zwei Stellen gleichzeitig abtasten. Das von den Lichtquellen abgegebene Licht besteht vorzugsweise aus unterschiedlicher Wellenlänge.

Es ist daher die Aufgabe der vorliegenden Erfindung, eine verbesserte Lichtabtastvorrichtung zur Abtastung einer Probe und zum Nachweis von durch das Abtastlicht angeregter Sekundärstrahlung zu schaffen, mit der eine schnellere und effizientere Abtastung einer großen Probe unter hoher Ortsauflösung erzielbar ist.

Erfindungsgemäß wird diese Aufgabe gelöst durch eine Lichtabtastvorrichtung der eingangs genannten Art, die sich dadurch auszeichnet, daß eine Aufteilungsvorrichtung vorgesehen ist zur Aufteilung des einzigen Lichtstrahlenbündels in wenigstens zwei Lichtstrahlenbündel. Durch die Aufteilung des einzigen Lichtstrahlenbündels in wenigstens zwei Lichtstrahlenbündel wird die gesamte Fläche der Probe nicht mehr wie bisher sequentiell abgetastet, sondern es werden wenigstens zwei Gebiete der Probe durch die wenigstens zwei Abtaststrahlenbündel simultan abgerastert. Dadurch kann bei gleicher Ortsauflösung die Abtastzeit im wesentlichen halbiert werden.

In einer vorteilhaften Weiterbildung der Erfindung umfaßt die Aufteilungsvorrichtung wenigstens einen, besser jedoch zwei refölektierende keilförmige Strahlteiler oder Spiegel, insbesondere Strahlteiler mit jeweils einer ersten und zweiten Fläche, an denen ein einziges einlaufendes Strahlenbündel unter Bildung von zwei Strahlenbündeln reflektiert wird, die unter einem dem Keilwinkel des Strahlteilers entsprechenden Winkel zueinander stehen. Bei der bevorzugten Verwendung von zwei reflektierenden keilförmigen Strahlteilern werden aus dem anfänglichen einzigen Strahlenbündel vier Strahlenbündel erzeugt. Durch die Aufteilung des einlaufenden Strahlenbündels in vier Strahlenbündel findet eine Unterteilung der Probe in vier Quadranten statt, wodurch die Abtastzeit im wesentlichen auf ein Viertel der entsprechenden Abtastzeit bei Verwendung eines einzigen Strahlenbündels verringert werden kann. Vorteilhafterweise sind die beiden keilförmigen Doppelspiegel oder Strahlteiler Teil der Ablenkeinheit und stellen die jeweiligen Kippspiegel mit zueinander senkrecht stehenden Drehachsen dieser Einheit, die mit entsprechenden Stellgliedern gekoppelt sind, dar.

In einer weiteren vorteilhaften Weiterbildung der Erfindung ist ein fokussierendes Objektiv zwischen der Ablenkeinheit und der Probe vorgesehen. Es ist insbesondere vorteilhaft, ein F/θ-Objektiv zu verwenden, das die Lichtstrahlenbündel unabhängig von der Ablage, d.h. dem Abstand von der optischen Achse, scharf fokussiert. Diese Art der Anordnung des fokussierenden Objektivs zwischen der Ablenkeinheit und der Probe wird als "Pre-Objective-Scanning" bezeichnet.

In einer weiteren vorteilhaften Weiterbildung besteht die Nachweiseinheit aus einem ortsauflösenden Detektorarray, wie z.B. einer CCD-Kamera oder einem Mehrkanalmultiplier oder einem Mehrkanalhalbleiterelement. Zur Verminderung unerwünschten Übersprechens der einzelnen Kanäle, die den von den einzelnen Lichtstrahlenbündeln abgetasteten Bereichen auf der Probe entsprechen, kann eine spezielle, an die jeweils abgetasteten Probenbereiche angepaßte Blende vor dem Detektor vorgesehen werden.

Bei Messung in transmittiver Anordnung ist es vorteilhaft, hinter der Probe möglichst die gesamte Fläche mit Lichtleitern zu versehen, wobei die einem jeden Abtastgebiet der Probe zugeordneten Lichtleiter zu einem Bündel zusammengefaßt sind und einer entsprechenden Detektorfläche oder einem eigenen Detektor zugeleitet werden. Beispielsweise werden bei einer Unterteilung der Probe in vier Quadranten die Lichtleiter in vier Bündel zusammengefaßt und auf vier verschiedene Detektoren geleitet, so daß die vier Quadranten gleichzeitig vermessen werden können. Dabei ist es möglich, Farbfilter vor den Detektoren anzuordnen, um einerseits das Anregungslicht zu unterdrücken und andererseits eine Selektion des Sekundärlichts durchzuführen. Die numerische Apertur der Lichtleiter beschränkt das Gesichtsfeld der Sekundärlichtemission und verhindert somit ein Kanalübersprechen. Falls die Probe aus gleichartigen Fluoreszenzfarbstoffen besteht, kann jeder der einem Abtastfeld der Probe zugeordneten Detektoren mit einem anderen Farbfilter ausgestattet werden, so daß z.B. bei Verwendung von vier Detektoren vier verschiedene Emissionswellenlängen gleichzeitig gemessen werden können.

Anstelle der Verwendung von verschiedenen, über Lichtleiterbündel mit der Probe gekoppelten Detektoren wäre es in einer weiteren Weiterbildung der Erfindung auch möglich, eine CCD-Kamera hinter der Probe bei transmittiver Anordnung anzuordnen. Um ein Mischen des Fluoreszenzlichts aller Kanäle in der Kamera zu verhindern, wird eine Platte aus Lichtleitfasern mit geringer numerischer Apertur vor die Kamera gestellt. Damit läßt sich ein Kanalübersprechen wirksam verhindern.

In einer weiteren vorteilhaften Weiterbildung der erfindungsgemäßen Lichtabtastvorrichtung ist ein Aufbau vorgesehen zur Erfassung des Sekundärlichts in reflektiver nichtkonfokaler Anordnung. Zur Schaffung der nichtkonfokalen Anordnung, d.h. einer Ausbildung des Strahlengangs des Sekundärlichts derart, daß die Spiegel der Ablenkeinheit in dessen Strahlengang nicht enthalten sind, ist vorteilhafterweise ein dichroitischer Strahlteiler zwischen der Ablenkeinheit und der Probe vorgesehen, mit dem der optische Weg des Abtastlichts vom optischen Weg des von der Probe ausgehenden Sekundärlichts separierbar ist. Insbesondere ist der dichroitische Strahlteiler für das Anregungslicht mit einer ersten kürzeren Wellenlänge durchlässig, während er das Sekundärlicht mit einer längeren Wellenlänge reflektiert.

Weitere vorteilhafte Ausführungsformen gehen aus den Unteransprüchen hervor.

Nachfolgend wird die vorliegende Erfindung beispielhaft anhand einer bevorzugten Ausführungsform unter Bezug auf die begleitenden Zeichnungen näher erläutert und beschrieben. In den Zeichnungen zeigen:
- Fig. 1: eine Skizze zur Veranschaulichung des prinzipiellen Aufbaus und des Strahlengangs einer erfindungsgemäßen Lichtabtastvorrichtung;
- Fig. 2: ein Beispiel für eine Aufteilungsvorrichtung in Form einer keilförmigen Strahlteilerplatte mit dem entsprechenden Strahlengang;
- Fig. 3: eine Skizze zur Veranschaulichung der verschiedenen Detektionskanäle in einer erfindungsgemäßen Lichtabtastvorrichtung; und
- Fig. 4: eine Skizze zur Veranschaulichung der Unterteilung einer Probe in vier Quadranten.

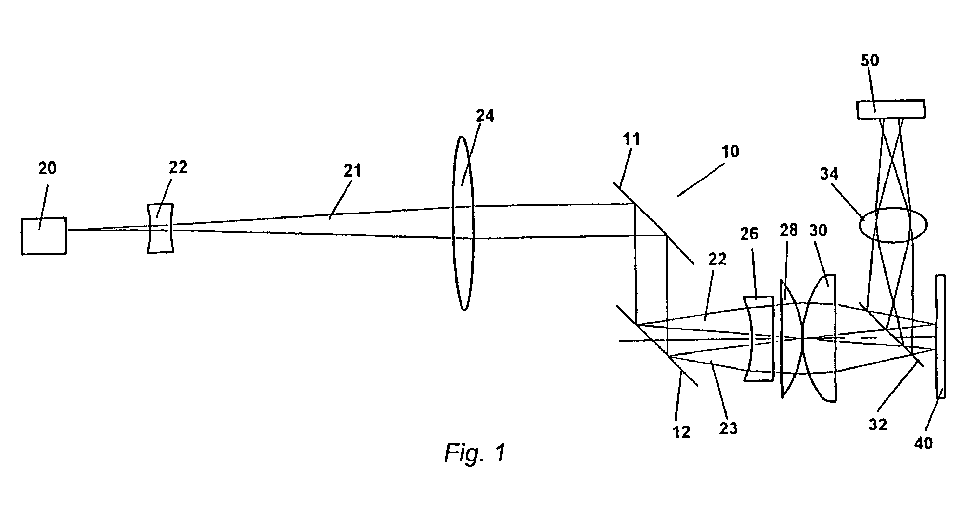

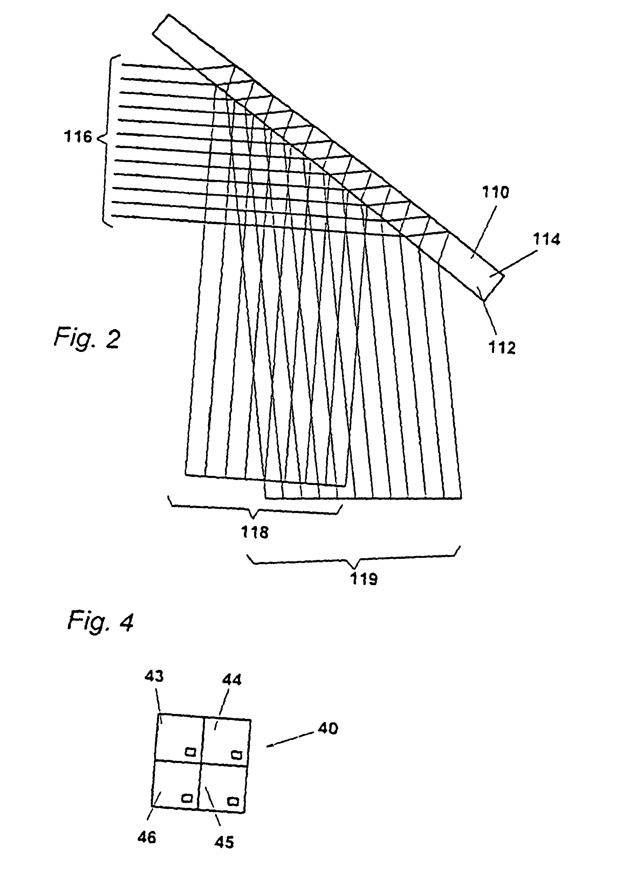

In Fig. 1 wird beispielhaft ein schematischer Aufbau einer erfindungsgemäßen Lichtabtastvorrichtung gezeigt. In einer Lichterzeugungsvorrichtung 20, z.B. einem Laser, wird ein einziges Lichtstrahlenbündel 21 bestimmter Wellenlänge erzeugt. Das von der Lichterzeugungsvorrichtung bzw. dem Laser erzeugte Lichtstrahlenbündel wird vorteilhafterweise in einem nicht gezeigten Raumfilter räumlich gefiltert. Das parallele Strahlenbündel wird durch eine beispielsweise zwei Linsen 22 und 24 umfassende Aufweitungsoptik in ein wiederum paralleles Strahlenbündel mit größerem Querschnitt aufgeweitet. Als nächstes Element im optischen Weg folgt eine Ablenkeinheit 10 mit Kippspiegeln 11 und 12, die zueinander senkrecht stehende Drehachsen aufweisen und an nicht gezeigte Stellglieder mit entsprechenden Ansteuerungen zur gegenseitigen Verstellung bzw. Verkippung angeschlossen sind, um das Strahlenbündel 21 in zwei Richtungen zu rastem. Wie nachfolgend in bezug auf Fig. 2 näher erläutert wird, bestehen in einer vorteilhaften Ausführungsform der Erfindung die Kippspiegel 11 und 12 jeweils aus keilförmigen Doppelspiegeln oder Strahlteilerplatten, die somit eine Aufteilungsvorrichtung zur Aufteilung des einzigen einlaufenden Laserstrahlbündel in insgesamt vier voneinander getrennte Laserstrahlenbündel bilden. Aus Gründen der übersichtlicheren Darstellung sind in Fig. 1 nur zwei Strahlenbündel 22 und 23 gezeigt.

Zwischen der Ablenkeinheit 10 mit den Kippspiegeln 11 und 12 ist eine Fokussierungsoptik angeordnet, die beispielsweise ein Linsentriplett aus Linsen 26, 28 und 30 umfaßt. Bei dieser Fokussierungsoptik handelt es sich vorteilhafterweise um ein F/θ-Objektiv, das die Strahlenbündel unabhängig von der Ablage scharf auf Fleckgrößen im Mikrometerbereich auf eine Probe 40 fokussiert. Bei dem F/θ-Objektiv wird eine Abbildung der Abtaststrahlenbündel gemäß der sog. F/θ-Bedingung y' = Fxθ durchgeführt, wobei y' die Abbildungskoordinate, F die Brennweite und θ der Winkel ist, den das Abtaststrahlenbündel mit der optischen Achse einschließt. Im Gegensatz zu herkömmlichen Objektiven, bei denen die sonst übliche Bedingung y' = F x tanθ gilt, führt das F/θ-Objektiv zu einer tonnenförmigen Verzeichnung. Dadurch wird jedoch eine Proportionalität zwischen dem Abtastwinkel und der Bildhöhe y' und zugleich auch eine Proportionalität zwischen der Winkelgeschwindigkeit des Ablenksystems und der Abtastgeschwindigkeit in der Probenebene sichergestellt. Bei konstanter Winkelgeschwindigkeit für die Ablenkung des Strahlenbündels wird somit aufgrund der Linearität zwischen der Abtastgeschwindigkeit auf der Probe und der Winkelgeschwindigkeit eine konstante Anregungsintensität auf der Probe unabhängig von der Abtastposition geschaffen.

Diese Art der Anordnung der Fokussierungsoptik zwischen der Ablenkeinheit 10 mit den Kippspiegeln 11 und 12 und der Probe 40 wird als "Pre-Objective-Scanning" bezeichnet. Dies wird häufiger angewandt als ein "Post-Objective-Scanning", bei dem die Fokussierungsoptik im optischen Weg vor der Ablenkeinheit 10 angeordnet ist, so daß das nach der Fokussierungsoptik konvergente Abtastlicht über die Abtastspiegel abgelenkt und auf die Probe 40 geleitet wird. Bei dieser Art der Anordnung der Fokussierungsoptik vor der Ablenkeinheit 10 werden an das Objektiv nur minimale Forderungen gestellt. Es kann einen kleinen Durchmesser haben und braucht nur im paraxialen Gebiet scharf abzubilden. Die hinter dem Objektiv angeordnete Ablenkeinheit führt jedoch zu einer gekrümmten Abtastlinie, die auf einem Kreisbogen um die Drehachse des Kippspiegels liegt. Zum Abtasten ebener Oberflächen ist daher diese Anordnung des "Post-Objective-Scanning" nicht bevorzugt.

Daher ist die "Pre-Objective-Scanning"-Anordnung mit einem F/θ-Objektiv, mit dem eine Abbildung in eine Ebene mit einer zum Ablenkwinkel proportionalen Bildkoordinate möglich ist, vorteilhaft. Das F/θ-Objektiv in der "Pre-Objective-Scanning"-Anordnung muß jedoch einen relativ großen Durchmesser aufweisen, um auch Abtaststrahlenbündel mit großem Abtastwinkel noch aufzunehmen. Es muß auch über einen relativ großen Bildwinkel entsprechend der Verkippung des Lichtstrahlenbündels gegenüber der optischen Achse korrigiert sein und es muß ferner eine gute Bildfeldebnung aufweisen.

Zwischen der Fokussierungsoptik und der Probe 40 ist ein dichroitischer Spiegel 32 angeordnet, der das Anregungslicht mit der bestimmten Wellenlänge durchläßt und das auf oder von der Probe 40 erzeugte Sekundärlicht, das eine zum Anregungslicht unterschiedliche, d.h. längere, Wellenlänge aufweist, reflektiert. In der Reflexionsrichtung des dichroitischen Spiegels 32 ist nachfolgend eine Sammeloptik 34 und ein Detektor 50 angeordnet.

Die in Fig. 1 gezeigte Anordnung stellt den Fall der Messung des Sekundärlichts in reflektiver, nichtkonfokaler Anordnung dar. Die nichtkonfokale Anordnung besitzt den Vorteil, daß ein größerer Raumwinkel für das von der Probe emittierte Sekundärlicht als bei konfokaler Abbildung aufgenommen werden kann.

Trotzdem wäre im Gegensatz dazu auch eine konfokale Anordnung (in Fig. 1 nicht gezeigt) möglich, bei der das von der Probe emittierte Sekundärlicht über die gleichen Kippspiegel 11 und 12 zurückgeleitet wird, so daß der exakt gleiche Strahlengang wie für das Abtastlicht rückwärts durchlaufen wird. Der dichroitische Spiegel wäre in dieser Anordnung zwischen der Lichtquelle 20 und der Ablenkeinheit 10 vorgesehen, um die optischen Wege des Anregungslichts und des wellenlängenverschobenen Sekundärlichts zu trennen. Durch zusätzliche Fokussierung des Sekundärlichts auf eine (nicht gezeigte) Lochblende, z.B. mit einem Loch im Mikrometerbereich, könnte unerwünschtes Streulicht weitgehend unterdrückt werden. Bei der konfokalen Anordnung wird jedoch nur ein sehr kleiner Raumwinkel des Sekundärlichts, der durch die Spiegelaperturen begrenzt ist, erfaßt, wenn gleichzeitig ein größeres Gesichtsfeld abgetastet werden soll.

Im Gegensatz zu der in Fig. 1 gezeigten Anordnung wäre es auch möglich, anstatt der reflektiven Anordnung in transmittiver Anordnung zu messen. Bei der transmittiven Anordnung muß das Abtast- bzw. Anregungslicht mit Hilfe von (nicht gezeigten) Filtern (z.B. Notch-Filtern bzw. Kantenfiltern) geblockt werden, die ihrerseits Licht auf die Probe reflektieren und somit eine Verschmierung des Anregungslichtflecks auf der Probe bewirken. Aus diesem Grund ist die in Fig. 1 gezeigte Reflexionsanordnung gegenüber der transmittiven Anordnung vorteilhaft.

In Fig. 2 ist ein Beispiel für eine erfindungsgemäße Realisierung der Aufteilungsvorrichtung zur Aufteilung des einzigen Lichtstrahlenbündels in wenigstens zwei Lichtstrahlenbündel gezeigt. Die Aufteilungsvorrichtung besteht dabei aus einer keilförmigen Strahlteilerplatte 110, an deren erster Oberfläche 112 und zweiter Oberfläche 114 die Lichtstrahlen eines einfallenden Lichtstrahlenbündels 116 jeweils reflektiert werden zur Erzeugung zweier Lichtstrahlenbündel 118 und 119. Vorteilhafterweise ist der in Fig. 1 gezeigte Kippspiegel 12 in der Form der in Fig. 2 gezeigten keilförmigen Strahlteilerplatte 110 ausgebildet. Insbesondere ist es günstig, beide Kippspiegel 11 und 12 der Ablenkeinheit 10 in Fig. 1 jeweils durch eine wie in Fig. 2 gezeigte Strahlteilerplatte 110 auszubilden, wodurch eine Aufteilung des einzigen einfallenden Lichtstrahlenbündels in vier Lichtstrahlenbündel erfolgt. In diesem Fall wird die Probe 40 wie in Fig. 4 gezeigt in vier Quadranten 43, 44, 45 und 46 unterteilt. Die Fläche eines jeden Quadranten der Probe wird jeweils von einem der vier Strahlenbündel des Abtastlichts bei entsprechender Verstellung der Kippspiegel abgetastet. Bei einer abgetasteten Probe mit einer makroskopischen Abmessung von etwa 24 x 24 mm wird daher die Zeitdauer für eine vollständige Abtastung der Probe auf ein Viertel der bisher notwendigen Zeit verringert. Daher ist es möglich, weiterhin unter vertretbaren Zeiten für die Abtastung einer großen Probe die Strahlenbündel des Abtastlichts stärker als bisher zu fokussieren zur Erhöhung der Ortsauflösung bei der Abtastung.

Wenn der Abtastlichtstrahl auf einen Punkt fokussiert wird, kann Streulicht auch Nachbarmoleküle erreichen, deren Sekundärlicht bei nichtkonfokaler Abbildung mitgemessen wird und der momentanen Position der Kippspiegel der Abtasteinheit zugeordnet wird. Ein nicht konfokaler Aufbau könnte trotzdem noch vorteilhaft sein, da bei einem konfokalen Ausbau das Signal wesentlich kleiner ist aufgrund des geringeren Raumwinkels. Zudem wird die zuvor genannte Schwierigkeit in bezug auf das Streulicht durch die erfindungsgemäße Anordnung vermindert, da eine Erhöhung der Auflösung, d.h. eine stärkere Fokussierung des Abtaststrahls ohne das Auftreten eines erhöhten Zeitaufwands bei der Abtastung der Probe, möglich ist.

Ein weiterer Vorteil der beschriebenen Ausführungsform besteht darin, daß durch die Aufteilung des Abtastlichtstrahlenbündels in vier Lichtstrahlenbündel und eine entsprechende Aufteilung der Probe in vier Quadranten jedes der Abtastlichtstrahlenbündel jeweils nur eine kleinere Fläche überdecken muß. Damit sind nur geringere Auslenkungen der Kippspiegel 11 und 12 erforderlich, die mit geringeren Fehlern bzw. Toleranzen realisierbar sind. Die Kippbewegung der Kippspiegel wird dabei so angepaßt, daß die in Fig. 4 gezeigten Quadranten 43-46 jeweils vollständig durch die entsprechenden Teilstrahlenbündel überstrichen werden.

Vorteilhafterweise ist der Keilwinkel der Strahlteilerplatten so groß, daß der makroskopische Abstand der einzelnen Strahlenbündel auf der Probe groß ist gegenüber der mittleren Streulänge innerhalb der Probe. Bei dem Beispiel einer Probe mit 24 x 24 mm Fläche ist dieser Abstand optimalerweise 12 mm.

In Fig. 4 ist schematisch der prinzipielle Aufbau der verschiedenen Detektionskanäle gezeigt. An der Probe 40 wird an zwei Stellen durch Strahlenbündel 61 und 62 dargestelltes Sekundärlicht erzeugt. Dieses Licht wird am dichroitischen Spiegel 32 wie zuvor erwähnt reflektiert und durch ein beispielsweise aus drei Linsen 35, 36 und 37 bestehendes Makroobjektiv auf den Detektor 50 fokussiert. Jeder Punkt der Probenebene entspricht dabei eindeutig einem Punkt in der Detektorebene. Bei dem Detektor handelt es sich vorteilhafterweise um eine CCD-Kamera oder einen Mehrkanalfotomultiplier, z.B. das Modell R5900U-00-M4 von Hamamatsu, oder ein Mehrkanalhalbleiterelement. Derartige Detektoren sind zur simultanen Erfassung mehrerer Kanäle geeignet. Die jeweiligen Abtastfelder der Probe (z.B. vier Quadranten) werden entsprechend auf die Detektorebene abgebildet. Zur Unterdrückung eines unerwünschten Übersprechens der Kanäle kann eine spezielle, an die Unterteilung der Probe angepaßte Blende 52 vor dem Detektor vorgesehen sein. Für die zuvor erwähnte Ausführungsform mit vier Abtaststrahlenbündeln besitzt die Blende 52 eine entsprechende Unterteilung in vier Quadranten.

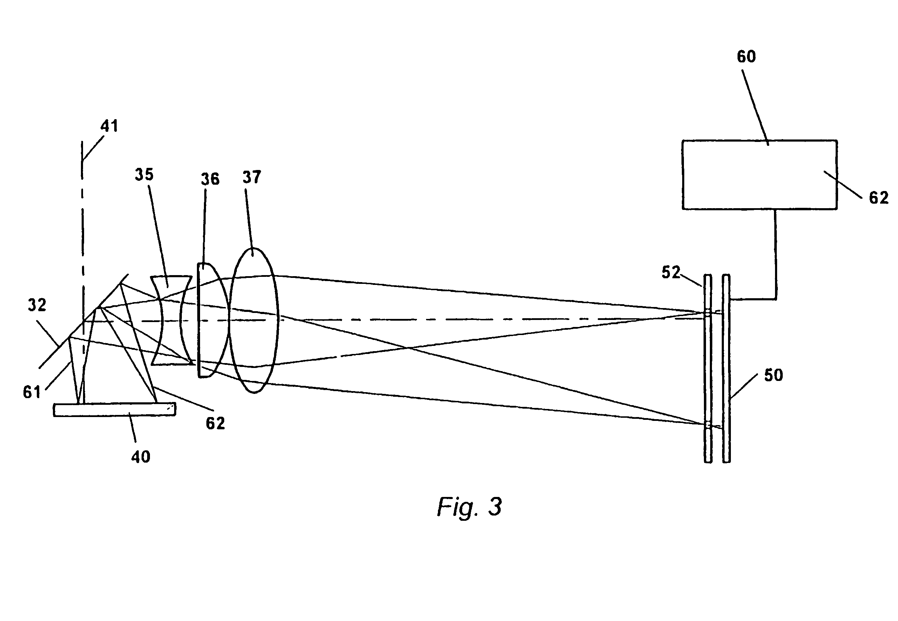

Im Gegensatz zu der in der Fig. 1 und 3 gezeigten Anordnung zur Messung des Sekundärlichts in Reflexion ist es auch möglich, in transmittiver Anordnung zu messen. Dabei wird z.B. hinter der Probe die gesamte Fläche mit Lichtleitern versehen, wobei jeder Quadrant zusammengefaßt wird zu einem Bündel. Es werden dann vier Bündel auf vier verschiedene Detektoren geleitet, die gleichzeitig vermessen werden können. Zur Unterdrückung des Anregungslichts und zur Selektion des Sekundärlichts können spezielle Filter vor den Detektoren vorgesehen werden. Die numerische Apertur der Lichtleiter beschränkt das Gesichtsfeld der Sekundärlichtemission und verhindert somit ein Kanalübersprechen. Falls die Probe aus gleichartigen Fluoreszenzfarbstoffen besteht, kann jeder der einem Quadranten zugeordneten Detektoren mit einem anderen Farbfilter ausgestattet werden, so daß bis zu vier verschiedene Emissionswellenlängen gleichzeitig gemessen werden können. Alternativ dazu ist es möglich, einfach eine CCD-Kamera hinter der Probe vorzusehen. Diese Kamera würde jedoch das Fluoreszenzlicht aller vier Kanäle mischen. Dies wird verhindert, indem man eine Platte (sog. Face-Platte) aus Lichtleitfasern mit geringer numerischer Apertur vor die Kamera stellt, um das Kanalübersprechen zu unterdrücken.

## Patentansprüche

1. Lichtabtastvorrichtung zur Anregung und Detektion einer Emission von Sekundärlicht, insbesondere von Fluoreszenzlicht, an einer Probe (40) mit
einer Lichterzeugungsvorrichtung (20) zur Erzeugung von Abtastlicht in Form eines einzigen Lichtstrahlenbündels (21),
einer Ablenkeinheit (10) zur in wenigstens einer Richtung veränderbaren Ablenkung des Abtastlichts zur Abtastung wenigstens einer Teilfläche der Probe (40),
einer Abbildungseinheit (34; 35, 36, 37)zur Abbildung von von der Probe ausgehendem Sekundärlicht (61, 62), und
einer Nachweiseinheit (50) zur Detektion des Sekundärlichts,
**dadurch gekennzeichnet,**
**daß** eine Aufteilungsvorrichtung (110) im optischen Weg des Abtastlichts vorgesehen ist zur Aufteilung des einzigen Lichtstrahlenbündels in wenigstens zwei Lichtstrahlenbündel (22, 23; 118, 119).

2. Lichtabtastvorrichtung gemäß Anspruch 1, **dadurch gekennzeichnet, daß** die Aufteilungsvorrichtung (110) ein reflektierender keilförmiger Strahlteiler mit einen Winkel miteinander bildenden ersten und zweiten reflektierenden Flächen (112, 114) ist, an denen das einzige Lichtstrahlenbündel (116) unter Bildung von zwei einen Winkel miteinander einschließenden Lichtstrahlenbündeln (118, 119) reflektiert wird.

3. Lichtabtastvorrichtung gemäß Anspruch 2, **dadurch gekennzeichnet, daß** die Aufteilungsvorrichtung zwei derart angeordnete reflektierende keilförmige Strahlteiler (110) umfaßt, daß an dem ersten reflektierenden keilförmigen Strahlteiler das einzige Lichtstrahlenbündel unter Bildung von zwei Lichtstrahlenbündeln reflektiert wird, die auf den zweiten reflektierenden keilförmigen Strahlteiler treffen und an diesem unter Bildung von vier Lichtstrahlenbündeln reflektiert werden.

4. Lichtabtastvorrichtung gemäß Anspruch 3, **dadurch gekennzeichnet, daß** die beiden reflektierenden keilförmigen Strahlteiler Teil der Ablenkeinheit (10) sind und mit Stellvorrichtungen zur Drehung und/oder Verschiebung der jeweiligen Strahlteiler zur Abtastung der Probe verbunden sind.

5. Vorrichtung gemäß einem der Ansprüche 1-4, **dadurch gekennzeichnet, daß** eine Fokussierungsoptik (26, 28, 30) zwischen der Aufteilungsvorrichtung und der Probe zur Fokussierung aller Lichtstrahlenbündel auf die Probe vorgesehen ist.

6. Vorrichtung nach Anspruch 5, **dadurch gekennzeichnet, daß** die Fokussierungsoptik ein F/θ-Objektiv umfaßt.

7. Lichtabtastvorrichtung gemäß einem der vorhergehenden Ansprüche, **dadurch gekennzeichnet, daß** die Nachweiseinheit (50) zur ortsaufgelösten Detektion des Sekundärlichts geeignet ausgebildet ist.

8. Lichtabtastvorrichtung gemäß Anspruch 7, **dadurch gekennzeichnet, daß** die Nachweiseinheit(50) entsprechend der Zahl der auf die Probe auftreffenden Abtastlichtstrahlenbündel in Felder unterteilt ist.

9. Lichtabtastvorrichtung gemäß Anspruch 8, wobei eine entsprechend der Felder der Nachweiseinheit unterteilte Blende (52) vor der Nachweiseinheit angeordnet ist.

10. Lichtabtastvorrichtung gemäß einem der vorhergehenden Ansprüche, **dadurch gekennzeichnet, daß** die Abbildungseinheit (34; 35, 36, 37) zur Aufnahme von durch die Probe (40) transmittiertem Sekundärlicht geeignet angeordnet ist.

11. Lichtabtastvorrichtung gemäß Anspruch 10, **dadurch gekennzeichnet, daß** auf der der Einfallsseite des Abtastlichts gegenüberliegenden Seite der Probe (40) zu einem Bündel zusammengefaßte Lichtleiter vorgesehen sind, die entsprechend den jeweiligen Abtastgebieten der auf die Probe auftreffenden Abtastlichtstrahlenbündel an ihrem detektorseitigen Ende in Teilbündel aufgeteilt sind, denen jeweils eigene Detektoren zugeordnet sind.

12. Lichtabtastvorrichtung gemäß Anspruch 11, **dadurch gekennzeichnet, daß** zwischen den Teilbündeln aus Lichtleitern und den jeweiligen Detektoren jeweils ein Wellenlängenfilter vorgesehen ist.

13. Lichtabtastvorrichtung gemäß Anspruch 12, **dadurch gekennzeichnet, daß** die Wellenlängenfilter Farbfilter für jeweils unterschiedliche Wellenlängen des Sekundärlichts sind.

14. Lichtabtastvorrichtung gemäß Anspruch 10, **dadurch gekennzeichnet, daß** die Abbildungseinheit eine Platte aus Lichtleitfasern mit geringer numerischer Apertur umfaßt und daß die Nachweiseinheit (50) eine CCD-Kamera umfaßt.

15. Lichtabtastvorrichtung gemäß einem der Ansprüche 1-9, **dadurch gekennzeichnet, daß** ein Aufbau zur Erfassung des Sekundärlichts in reflektiver, nichtkonfokaler Anordnung vorgesehen ist.

16. Vorrichtung gemäß Anspruch 15, **dadurch gekennzeichnet, daß** die Abbildungseinheit einen dichroitischen Strahlteiler (32) umfaßt, mit dem der optische Weg des Abtastlichts von dem des von der Probe ausgehenden Sekundärlichts separierbar ist.

17. Vorrichtung gemäß einem der vorhergehenden Ansprüche, **dadurch gekennzeichnet, daß** die Lichterzeugungsvorrichtung (20) zur Erzeugung des Abtastlichts in Form eines einzigen Lichtstrahls einen Laser umfaßt.

18. Vorrichtung gemäß einem der vorhergehenden Ansprüche, **dadurch gekennzeichnet, daß** die Lichterzeugungsvorrichtung zur Erzeugung des Lichtstrahls eine Vorrichtung zur räumlichen Filterung des einzigen Lichtstrahls umfaßt.

## Claims

1. A light scanning device for exciting and detecting an emission of secondary light, especially fluorescent light, on a sample (40), comprising
a light generating device (20) for generating scanning light in the form of a single light beam (21),
a deflection unit (10) used for effecting a deflection of the scanning light for scanning at least one subarea of the sample (40), said deflection being variable in at least one direction,
an imaging unit (34; 35, 36, 37) for forming an image of the secondary light (61, 62) emanating from the sample, and
a detection unit (50) for detecting the secondary light,
**characterized in**
**that** a division device (110) is provided in the optical path of the scanning light for dividing the single light beam into at least two light beams (22, 23; 118, 119).

2. A light scanning device according to claim 1, **characterized in that** the division device (110) is a reflecting wedge-shaped beam splitter with first and second reflecting surfaces (112, 114) which form an angle with each other and at which the single light beam (116) is reflected, whereby two light beams (118, 119) enclosing an angle with each other are formed.

3. A light scanning device according to claim 2, **characterized in that** the division device comprises two reflecting wedge-shaped beam splitters (110) which are arranged in such a way that the single light beam is reflected at the first reflecting, wedge-shaped beam splitter, whereby two light beams are formed which impinge upon the second reflecting, wedge- shaped beam splitter and which are reflected at this second reflecting beam splitter, whereby four light beams are formed.

4. A light scanning device according to claim 3, **characterized in that** the two reflecting, wedge-shaped beam splitters constitute part of the deflection unit (10) and are connected to adjusting elements for rotating and/or displacing the respective beam splitters for scanning the sample.

5. A light scanning device according to one of the claims 1 to 4, **characterized in that** a focussing optics (26, 28, 30) is provided between the division device and the sample for focussing all light beams onto the sample.

6. A light scanning device according to claim 5, **characterized in that** the focussing optics comprises an F/Θ lens.

7. A light scanning device according to one of the preceding claims, **characterized in that** the detection unit (50) is implemented such that it is suitable for detecting the secondary light in a spatially resolved manner.

8. A light scanning device according to claim 7, **characterized in that** the detection unit (50) is subdivided into fields in correspondence with the number of scanning light beams impinging upon the sample.

9. A light scanning device according to claim 8, wherein a diaphragm (52) subdivided in correspondence with the fields of the detection unit is arranged in front of said detection unit.

10. A light scanning device according to one of the preceding claims, **characterized in that** the imaging unit (34; 35, 36, 37) is arranged in such a way that it is adapted to accept secondary light transmitted by the sample (40).

11. A light scanning device according to claim 10, **characterized in that** on the side of the sample (40) located opposite the side where the scanning light is incident, light guides are provided, which are combined so as to form a bundle and which are subdivided into sub-bundles at their detctor-side end according to the respective scanning areas of the scanning light beams impinging upon the sample, each of said sub-bundles having associated therewith detectors of their own.

12. A light scanning device according to claim 11, **characterized in that** respective wavelength filters are provided between the sub-bundles of light guides and the respective detectors.

13. A light scanning device according to claim 12, **characterized in that** the wavelength filters are colour filters for the respective different wavelengths of the secondary light.

14. A light scanning device according to claim 10, **characterized in that** the imaging unit is a plate consisting of light-conducting fibres having a small numerical aperture and that the detection unit (50) comprises a CCD camera.

15. A light scanning device according to one of the claims 1 to 9, **characterized in that** a set-up for detecting the secondary light is provided in a reflective, non-confocal arrangement.

16. A light scanning device according to claim 15, **characterized in that** the imaging unit comprises a dichroic beam splitter (32) by means of which the optical path of the scanning light can be separated from that of the secondary light emanating from the sample.

17. A light scanning device according to one of the preceding claims, **characterized in that** the light-generating device (20) used for generating the scanning light in the form of a single beam comprises a laser.

18. A light scanning device according to one of the preceding claims, **characterized in that** the light-generating device used for generating the beam comprises a device for spatially filtering the single beam.

## Revendications

1. Dispositif de balayage lumineux pour provoquer et détecter une émission de lumière secondaire, en particulier une lumière fluorescente, sur un échantillon (40),
comprenant un générateur de lumière (20) pour produire une lumière de balayage sous la forme d'un unique faisceau de rayons lumineux (21),
une unité de déviation (10) pour la déviation, variable dans au moins une direction, de la lumière de balayage en vue de balayer au moins une surface partielle de l'échantillon (40),
une unité de reproduction optique (34 ; 35, 36, 37) pour reproduire la lumière secondaire (61, 62) émanant de l'échantillon, et
une unité de détection (50) pour détecter la lumière secondaire,
**caractérisé en ce qu'**il est prévu sur la trajectoire optique de la lumière de balayage un dispositif de division (110) pour diviser l'unique faisceau de rayons lumineux en au moins deux faisceaux de rayons lumineux (22, 23 ; 118, 119).

2. Dispositif de balayage lumineux selon la revendication 1, **caractérisé en ce que** le dispositif de division (110) est constitué par un séparateur de rayons cunéiforme réfléchissant, avec des première et seconde surfaces réfléchissantes (112, 114) qui forment un angle et sur lesquelles l'unique faisceau de rayons lumineux (116) est réfléchi en formant deux faisceaux de rayons lumineux (118, 119) qui définissent un angle.

3. Dispositif de balayage lumineux selon la revendication 2, **caractérisé en ce que** le dispositif de division comprend deux séparateurs de rayon cunéiformes réfléchissants (110) qui sont disposés de telle sorte que sur le premier séparateur de rayons cunéiforme réfléchissant, le faisceau unique soit réfléchi en formant deux faisceaux de rayons lumineux qui arrivent sur le second séparateur de rayons cunéiforme réfléchissant et sont réfléchis sur celui-ci en formant quatre faisceaux de rayons lumineux.

4. Dispositif de balayage lumineux selon la revendication 3, **caractérisé en ce que** les deux séparateurs de rayon cunéiformes réfléchissants font partie de l'unité de déviation (10) et sont reliés à des dispositifs de réglage pour tourner et/ou déplacer les séparateurs respectifs en vue du balayage de l'échantillon.

5. Dispositif selon l'une des revendications 1 à 4, **caractérisé en ce qu'**un système optique de focalisation (26, 28, 30) est prévu entre le dispositif de division et l'échantillon, pour focaliser tous les faisceaux de rayons lumineux sur l'échantillon.

6. Dispositif selon la revendication 5, **caractérisé en ce que** le système optique de focalisation comprend un objectif F/θ.

7. Dispositif de balayage lumineux selon l'une des revendications précédentes, **caractérisé en ce que** l'unité de détection (50) est conçue d'une manière appropriée pour la détection de la lumière secondaire avec une résolution locale.

8. Dispositif de balayage lumineux selon la revendication 7, **caractérisé en ce que** l'unité de détection (50) est divisée en zones suivant le nombre de faisceaux de rayons lumineux de balayage qui arrivent sur l'échantillon.

9. Dispositif de balayage lumineux selon la revendication 8, dans lequel un diaphragme (52) divisé en fonction des zones de l'unité de détection est disposé devant celle-ci.

10. Dispositif de balayage lumineux selon l'une des revendications précédentes, **caractérisé en ce que** l'unité de reproduction optique (34 ; 35, 36, 37) est disposée d'une manière appropriée pour recevoir la lumière secondaire transmise par l'échantillon (40).

11. Dispositif de balayage lumineux selon la revendication 10, **caractérisé en ce qu'**il est prévu sur le côté de l'échantillon (40) opposé au côté incident de la lumière de balayage des conducteurs de lumière qui sont réunis en un faisceau et qui, suivant les zones de balayage respectives des faisceaux de rayons lumineux de balayage arrivant sur l'échantillon, sont divisés à leur extrémité située côté détecteur en faisceaux partiels auxquels sont associés des détecteurs propres individuels.

12. Dispositif de balayage lumineux selon la revendication 11, **caractérisé en ce qu'**il est prévu entre les faisceaux partiels de conducteurs lumineux et les détecteurs respectifs un filtre de longueurs d'ondes.

13. Dispositif de balayage lumineux selon la revendication 12, **caractérisé en ce que** les filtres de longueurs d'ondes sont des filtres colorés pour différentes longueurs d'ondes de la lumière secondaire.

14. Dispositif de balayage lumineux selon la revendication 10, **caractérisé en ce que** l'unité de reproduction optique comprend une plaque de fibres optiques avec une ouverture numérique faible, et **en ce que** l'unité de détection (50) comprend une caméra à dispositif à transfert de charge.

15. Dispositif de balayage lumineux selon l'une des revendications 1 à 9, **caractérisé en ce qu'**il est prévu une structure pour détecter la lumière secondaire dans un dispositif réfléchissant non confocal.

16. Dispositif selon la revendication 15, **caractérisé en ce que** l'unité de reproduction optique comprend un séparateur de rayon dichroïque (32) grâce auquel la trajectoire optique de la lumière de balayage peut être séparée de celle de la lumière secondaire émanant de l'échantillon.

17. Dispositif selon l'une des revendications précédentes, **caractérisé en ce que** le générateur de lumière (20) destiné à produire la lumière de balayage sous la forme d'un unique rayon lumineux comprend un laser.

18. Dispositif selon l'une des revendications précédentes, **caractérisé en ce que** le générateur de lumière destiné à produire le rayon lumineux comprend un dispositif pour filtrer dans l'espace l'unique rayon lumineux.
